# FASCICULE DE BREVET EUROPEEN

(11) **EP 4 207 631 B1**
(45) Date de publication et mention de la délivrance du brevet: **09.10.2024**
(21) Numéro de dépôt: 22217007.8
(22) Date de dépôt: 28.12.2022
(51) Int. Cl.: H04B 7/185

(54) **PROCÉDÉ DE CONFIGURATION D'UNE CONSTELLATION DE SATELLITES DÉFILANTS ET PROCÉDÉ DE COMMUNICATION, GESTIONNAIRE ET SYSTÈME DE COMMUNICATION ASSOCIÉS**
VERFAHREN ZUR KONFIGURATION EINER KONSTELLATION VON SICH BEWEGENDEN SATELLITEN UND KOMMUNIKATIONSVERFAHREN, MANAGER UND KOMMUNIKATIONSSYSTEM DAFÜR
METHOD FOR CONFIGURING A MOVING SATELLITE CONSTELLATION AND ASSOCIATED COMMUNICATION METHOD, MANAGER AND COMMUNICATION SYSTEM

(30) Priorité: 29.12.2021 FR 2114620
(43) Date de publication de la demande: 05.07.2023
(73) Titulaire: THALES, 92400 Courbevoie (FR)
(72) Inventeur: SOULIE, Antoine, 92622 GENNEVILLIERS CEDEX (FR); ROZEC, Jean-Noel, 92622 GENNEVILLIERS CEDEX (FR)
(74) Mandataire: Lavoix

(56) Documents cités:
- US-A1- 2019 386 736
- ZENG YUAN ED - HEMMATI HAMID *1954-* [HERAUSGEBERIN] IDENTITY ET AL: "Research of the key technology in satellite communication networks", PROCEEDINGS OF SPIE; [PROCEEDINGS OF SPIE ISSN 0277-786X VOLUME 10524], SPIE, US, vol. 10697, 20 February 2018 (2018-02-20), pages 106975A - 106975A, XP060102883, ISBN: 978-1-5106-1533-5, DOI: 10.1117/12.2307293
- GAYRARD JEAN-DIDIER ET AL: "Free-space optical communication technologies will enable next generation of ultra high throughput satellite", ALGORITHMS AND TECHNOLOGIES FOR MULTISPECTRAL, HYPERSPECTRAL, AND ULTRASPECTRAL IMAGERY XIX - PROCEEDINGS OF SPIE, SPIE, US, vol. 11852, 11 June 2021 (2021-06-11), pages 118525V - 118525V, XP060144860, ISSN: 0277-786X, ISBN: 978-1-5106-4548-6, DOI: 10.1117/12.2600017

## Description

La présente invention concerne un procédé de configuration d'une constellation de satellites défilants.

La présente invention concerne également un procédé de communication, un gestionnaire et un système de communication associés à ce procédé de configuration.

L'invention se rapport plus particulièrement au domaine des communications protégées utilisant des satellites défilants en orbite non-géostationnaire, telle que l'orbite terrestre basse (LEO en anglais pour « low earth orbit ») ou l'orbite terrestre moyenne (MEO en anglais pour « medium earth orbit »).

De manière connue en soi, les communications protégées reposent principalement sur une diversité fréquentielle synchronisée entre l'émission et la réception. Cette diversité fréquentielle repose donc sur une disponibilité spectrale importante par rapport à la largeur du canal (bande supérieure à 50 MHz pour 1 à 10 MHz de canalisation).

Dans le contexte des communications avec des satellites en orbite géostationnaire, de telles bandes sont disponibles en couverture couverte depuis la position géostationnaire du satellite (soit environ 1/3 de la surface terrestre) via une couverture globale ou via des spots, le satellite jouant le rôle d'un amplificateur du signal radiofréquence et de relais.

Dans le contexte des communications sous une constellation défilante, la couverture n'est plus globale, mais seulement disponible dans un rayon de typiquement 50 à 250 km sous chacun des satellites. Si certaines communications brèves peuvent être faites via le même satellite défilant, en général, les communications doivent être relayées entre les satellites lorsque l'émetteur et le récepteur ne sont pas ou plus couverts par le même satellite. Dans le contexte des communications protégées, le relayage des communications se décline donc dans un relayage du signal radiofréquence entre satellites.

Or, le relayage d'une multitude de signaux radiofréquence à très large bande ne peut être envisagé dans un cas général sur l'ensemble des satellites de la constellation.

En effet, le signal radiofréquence reçu/émis par un satellite (typiquement 100 MHz de bande passante) dans une couverture devrait pouvoir être rediffusé à l'ensemble des autres satellites de la constellation pour pouvoir émuler une couverture globale. Ce signal étant spécifique de chaque couverture, la charge de rediffusion entre satellites est typiquement fonction du nombre de satellite présents.

Dans une constellation de plusieurs centaines/milliers de satellites, la canalisation entre satellites devra donc être de l'ordre de 100 GHz, ce qui n'est pas atteignable ni en technologies hertziennes (liaison < 1 GHz de bande), ni en technologies optiques (liaison < 10GHz de bande). De plus il n'est pas possible de redescendre de telles largeurs de bandes dans les spots, chaque spot devant rediffuser les N x 100 MHz, dans une bande de tout au plus quelques GHz, la capacité de relayage est limitée à quelques dizaine de satellites.

Il est donc important de rendre le relayage radiofréquence transparent tout en évitant la congestion du réseau inter-satellitaire de la constellation pouvant contenir plusieurs centaines ou milliers de satellites.

En particulier, par « relayage transparent » ou plus globalement « communication en mode transparent » ou « communication transparente », on entend un mode de fonctionnement des satellites ou de tout autre transmetteur consistant à transmettre des signaux reçus, sans lecture et sans aucune interprétation particulière des données transportées par ces signaux. Autrement dit, dans un tel cas, le satellite ou tout autre transmetteur agit comme un simple relais relayant des données entre deux points.

L'état de la technique propose déjà quelques méthodes permettant de répondre à au problème de relayage transparent.

Selon certaines de ces méthodes, les constellations de satellites mettant en oeuvre une communication transparente utilisent des canaux à bande moins large et disposent d'une pluralité de serveurs terrestres (appelés « Hubs »). Chaque serveur traite alors le trafic dans une zone géographique limitée ce qui limite la nécessité de relayage inter-satellites.

Selon d'autres méthodes connues, certaines constellations de satellites, dites régénératives, décodent les signaux radiofréquence reçus et agissent en tant que commutateurs pour relayer le trafic démodulé.

Les méthodes de l'état de la technique ne sont toutefois pas complètement satisfaisantes.

En particulier, les constellations de satellites mettant en oeuvre une communication transparente ne peuvent offrir des canalisations large bande nécessaires aux communications protégées. Les constellations régénératives nécessitent que les clés des communications protégées soient mises à leur disposition ce qui n'est pas toujours possible. Les documents XP060102883, XP060144860 et US2019386736 divulguent des méthodes de l'art antérieur.

L'invention a pour objectif de proposer des moyens permettant de mettre en oeuvre une communication protégée en mode transparent via une constellation de satellites défilants tout en évitant les congestions dans les réseaux inter-satellitaires et la nécessité d'utilisation d'un grand nombre de serveurs (« hubs »). En particulier, l'invention peut être mise en oeuvre sans aucun serveur.

À cet effet, l'invention concerne un procédé de configuration conforme à l'objet de la revendication 1.

Suivant d'autres aspects avantageux de l'invention, le procédé de configuration comprend une ou plusieurs des caractéristiques des revendications 2 à 5.

La présente invention a également pour objet un procédé de communication conforme à l'objet de la revendication 6.

Suivant d'autres aspects avantageux de l'invention, le procédé de communication comprend une ou plusieurs des caractéristiques des revendications 7 à 8.

La présente invention a également pour objet un gestionnaire configuré pour mettre en oeuvre le procédé de configuration tel que défini ci-dessus.

La présente invention a également pour objet un système de communication comprenant :
- un gestionnaire tel que défini ci-dessus;
- une constellation de satellites ;
- au moins deux stations au sol.

Ces caractéristiques et avantages de l'invention apparaitront à la lecture de la description qui va suivre, donnée uniquement à titre d'exemple non limitatif, et faite en référence aux dessins annexés, sur lesquels :
- [Fig 1] la figure 1 est une vue schématique d'un système communication selon l'invention, le système de communication comprenant un gestionnaire selon l'invention et une constellation de satellites ;
- [Fig 2] la figure 2 est une vue schématique de l'un des satellites de la figure 1 ;
- [Fig 3] la figure 3 est un organigramme d'un procédé de configuration et d'un procédé de communication, selon l'invention. Le procédé de configuration est mis en oeuvre par le gestionnaire de la figure 1 et le procédé de communication est mis en oeuvre par le système de communication de la figure 1 ; et
- [Fig 4] la figure 4 est une vue schématique illustrant la mise en oeuvre du procédé de communication de la figure 3.

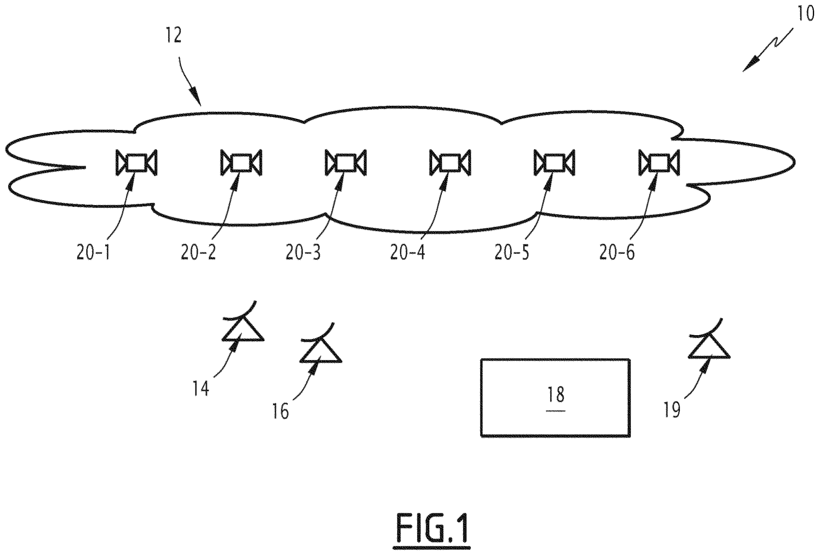

Le système de communication 10 selon l'invention est illustré sur la figure 1. Comme cela est visible sur cette figure, le système de communication 10 comprend une constellation de satellites 12, au moins deux stations au sol 14, 16 et un gestionnaire 18. Dans certains modes de réalisation, le système de communication 10 comprend en outre un serveur 19.

Chaque station au sol 14, 16 présente un récepteur/émetteur des signaux radiofréquence (appelés également signaux RF par la suite) qui peut être fixe ou mobile au sol dans une zone géographique connue. Certaines stations au sol peuvent être configurées seulement pour émission des signaux RF et certaines autres stations au sol peuvent être configurées seulement pour réception des signaux RF. Dans la suite de la description, il sera considéré que la station au sol 14 est une station émettrice des signaux RF et la station au sol 16 est une station réceptrice des signaux RF.

Selon différents modes de réalisation, le système de communication 10 peut comprendre des stations au sol fixes ou mobiles dans des zones géographiques distinctes. Par exemple, le système de communication 10 peut comprendre une paire de stations au sol fixes ou mobiles dans une zone géographique et une paire de stations au sol fixes ou mobiles dans une autre zone géographique.

Le serveur 19, appelé également « Hub », présente également une station au sol qui est connecté en outre à un réseau informatique terrestre, tel qu'un réseau RF ou un réseau filaire. Ainsi, un tel serveur 19 permet de relayer des signaux entre un satellite et une autre station au sol qui n'est pas couverte directement par un satellite.

La constellation de satellites 12 comprend N satellites 20-1 à 20-N défilants sur une orbite non-géostationnaire, telle que l'orbite terrestre basse ou l'orbite terrestre moyenne. Le nombre N est supérieur à 2, avantageusement supérieur à 10 et de préférence supérieur à 50. De manière générale, le nombre N peut être compris entre 2 et 1000. Dans certains modes de réalisation, le nombre N est entre 2 et 10 000. Encore dans certains autres modes de réalisation, le nombre N est supérieur à 10 000. Dans l'exemple de la figure 1, seuls six satellites, à savoir les satellites 20-1 à 20-6 sont représentés.

Chaque satellite 20-1 à 20-N est par exemple un mini-satellite ou alors un nano-satellite. En outre, de manière connue en soi, chaque satellite 20-1 à 20-N comprend une charge utile comprenant l'ensemble de ses composants électroniques permettant d'assurer ses fonctions de communication avec le sol et avec les autres satellites.

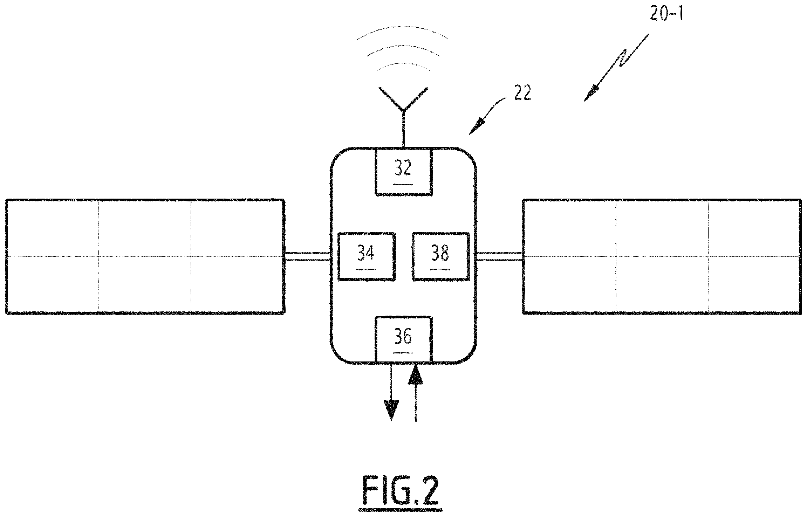

Les charges utiles des satellites 20-1 à 20-N sont par exemple sensiblement analogues entre elles. Ainsi, par la suite, seule la charge utile 22 par exemple du satellite 20-1 sera expliquée en détail en référence à la figure 2.

Ainsi, comme cela est illustré sur cette figure 2, la charge utile 22 comprend un récepteur/émetteur de signaux radiofréquence 32, appelé également récepteur/émetteur de signaux RF, un module de traitement 34, un modem d'émission/réception de signaux optiques 36 et un module de commande 38.

Le récepteur/émetteur de signaux RF 32 permet de recevoir des signaux RF par exemple issus d'une station au sol et d'émettre des signaux RF par exemple également vers une station au sol, en utilisant une ou plusieurs bandes attribuées aux communications satellitaires, telles que les bandes C, X, Ku, Ka, etc. Autrement dit, le récepteur/émetteur de signaux RF 32 permet d'assurer une liaison radiofréquence avec un autre récepteur/émetteur se trouvant à distance du satellite 20-1, comme par exemple une station au sol ou alors un autre satellite.

Pour ce faire, le récepteur/émetteur de signaux RF 32 est connecté à une ou plusieurs antennes aptes à former une pluralité de spots. Chaque faisceau peut couvrir des sous-zones différentes au sein d'une même zone géographique. Ainsi, à l'émission, des signaux RF peuvent être commutés sélectivement vers un ou plusieurs spots couvrant la sous-zone souhaitée.

Le modem d'émission/réception de signaux optiques 36 permet de recevoir des signaux optiques issus notamment d'un autre satellite et d'émettre des signaux optiques vers un autre satellite. Autrement dit, le modem d'émission/réception de signaux optiques 36 permet d'établir une liaison optique avec un autre satellite. Une telle liaison optique est connue dans l'art sous le terme de « OISL » (de l'anglais « Optical Inter Satellite Link »).

Le module d'émission/réception de signaux optiques 36 comprend également un commutateur apte à commuter des signaux optiques reçus via un port d'entrée afin de les émettre via un port de sortie. Ainsi, le commutateur permet de déterminer le port de sortie correspondant à chaque flux optique entrant en fonction par exemple d'une topologie de liaisons optiques inter-satellitaires établies à un instant donné.

Le module de traitement 34 permet d'extraire d'un flux RF reçu par l'émetteur/récepteur des signaux RF 32. Ce flux RF extrait correspond par exemple à une ou plusieurs sous-bandes de la bande correspondant à l'ensemble des signaux RF reçus. Le module de traitement 34 permet en outre de transformer les flux RF extraits pour être transmis sous une forme optique par le modem d'émission/réception de signaux optiques 36, comme cela sera expliqué en détail par la suite.

Le module de traitement 34 permet également d'extraire d'un flux optique reçu par le modem d'émission/réception de signaux optiques 36 un flux RF. Ce flux RF extrait correspond par exemple à une ou plusieurs sous-bandes RF qui doivent être transmises dans la bande RF correspondante via l'émetteur/récepteur des signaux RF 32.

Le module de commande 38 permet de contrôler le fonctionnement des modules 32, 34 et 36. En particulier, le module de commande 38 permet de basculer le fonctionnement de la charge utile 22 en mode transparent ou en mode hybride transparent pour certaines sous-bandes et regénératif pour d'autres, comme cela sera expliqué en détail par la suite. Inversement, le module de commande 38 permet de basculer le fonctionnement de la charge utile 22 en mode normal. En particulier, contrairement au mode transparent, la charge utile 22 fonctionne dans le mode normal selon sa mission nominale, c'est-à-dire en mettant en oeuvre une communication non-protégée et/ou alors une communication régénérative lors de laquelle des données protégées sont décryptées/encryptées à chaque relayage.

Dans certains modes de réalisation (non-illustrés), le module de commande 38 est déporté du satellite correspondant. Dans un tel cas, il peut par exemple être intégré dans le gestionnaire 18, dans toute autre station au sol ou alors dans un autre satellite. En outre, dans un tel cas, le module de commande 38 est apte à communiquer avec les autres modules du satellite via une ou plusieurs liaisons radiofréquence et/ou optiques. En particulier, lorsque le module de commande 38 est intégré dans une station au sol, il est considéré que ce module 38 est apte à communiquer à chaque instant avec au moins l'une des satellites 20-1 à 20-N via une liaison radiofréquence et que ce satellite est apte à communiquer avec le satellite correspondant au module de commande 38 via une ou plusieurs liaisons optiques. Enfin, le module de commande 38 peut être partagé entre plusieurs satellites.

Le gestionnaire 18 est disposé par exemple au sol de manière fixe ou mobile et est couvert à chaque instant par au moins l'un des satellites 20-1 à 20-N de la constellation 12. Dans l'exemple illustré sur la figure 1, le gestionnaire 18 permet de transmettre au moins à ce satellite des données de configuration permettant de contrôler les modules de commande 38 de l'ensemble des satellites 20-1 à 20-N de la constellation 12 comme cela sera expliqué en détail par la suite. La transmission de ces données s'effectue par exemple via une liaison RF. De ce fait, le gestionnaire 18 peut présenter une station au sol, telle que décrite précédemment. Lorsqu'au moins l'un des modules de commande 38 est déporté du satellite correspondant, le gestionnaire 18 est apte à communiquer avec ce module 38 en utilisant tout autre moyen disponible. Lorsqu'un tel module de commande 38 est intégré dans le gestionnaire 18, il s'agit donc d'une communication interne.

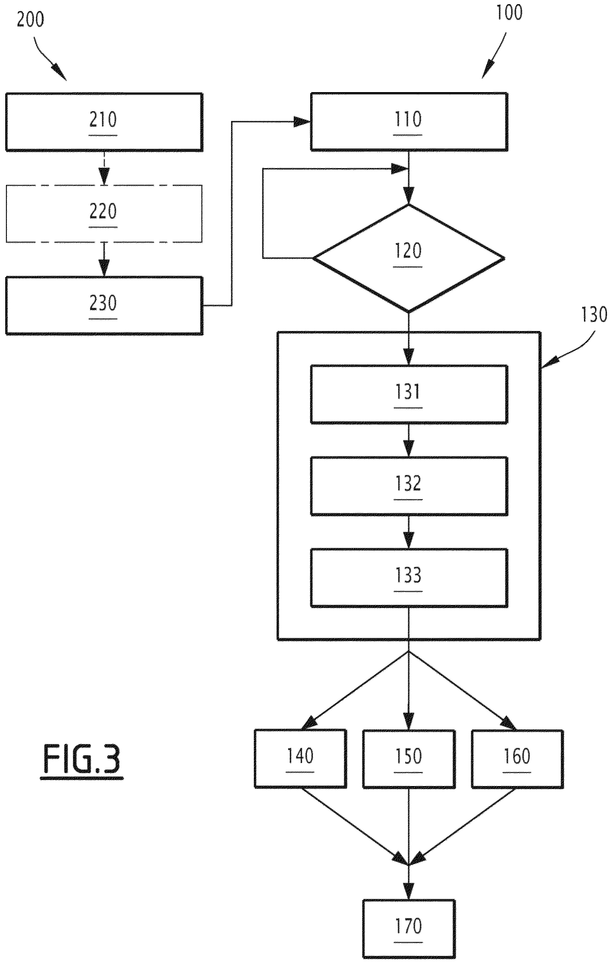

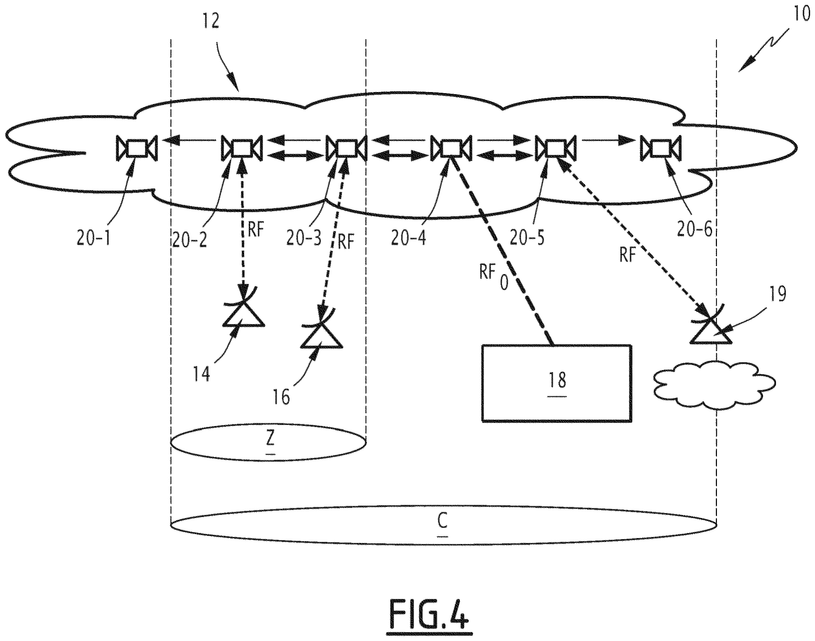

Un procédé de communication 100 mis en oeuvre par le système de communication 10 sera désormais expliqué en référence à la figure 3 présentant un organigramme des étapes de ce procédé et à la figure 4 illustrant une mise en oeuvre de celui-ci.

Il est considéré que lors de la mise en oeuvre du ce procédé, les satellites 20-1 à 20-N sont en défilement le long de leur orbite habituelle. En outre, avant la mise en oeuvre de ce procédé, les charges utiles 22 de l'ensemble des satellites 20-1 à 20-N sont en mode normal, tel que défini précédemment. Enfin, ce procédé sera expliqué en relation avec les stations au sol 14, 16 se trouvant, comme mentionné précédemment, dans une même zone géographique, et en relation avec le serveur 19 se trouvant dans une zone géographique différente. Dans un cas général, le nombre et la disposition de stations au sol et de serveurs peut varier.

Le procédé de communication 100 comprend une étape préliminaire 110 de configuration des satellites 20-1 à 20-N de la constellation 12 par le gestionnaire 18.

Pour ce faire, lors de cette étape 110, le gestionnaire 18 met en oeuvre un procédé de configuration 200 dont l'organigramme est également illustré sur la figure 3.

En particulier, lors d'une étape initiale 210 du procédé de configuration 200, le gestionnaire 18 détermine au moins une zone géographique à couvrir en mode transparent. Une telle zone géographique est déterminée en fonction des positions instantanées des stations au sol ou alors en fonction des zones dans lesquelles ces stations sont mobiles. Par exemple, des stations au sol devant se déplacer relativement proche l'une de l'autre peuvent considérées dans une même zone géographique à couvrir en mode transparent.

Ainsi, comme cela est illustré sur la figure 4, les stations au sol 14 et 16 sont considérées dans une même zone géographique Z. Lorsque ces stations 14 et 16 sont mobiles, la frontière de cette zone géographique Z est par exemple déterminée en analysant l'ensemble des déplacements possibles de ces stations.

Selon un mode de réalisation avantageux de l'invention, le procédé de configuration 200 comprend en outre une étape 220 lors de laquelle le gestionnaire 18 détermine en outre un chemin à couvrir en mode transparent entre au moins une station au sol et au moins un serveur.

Un tel chemin est par exemple déterminé lorsqu'il est nécessaire que la station au sol correspondante communique avec le serveur correspondant en mode transparent tout en étant relativement éloignée de celui-ci. Ainsi, à la différence d'une zone à couvrir en mode transparent, seules les extrémités du chemin à couvrir en mode transparent peuvent communiquer en mode transparent avec le sol.

Dans l'exemple de la figure 4, un chemin à couvrir en mode transparent C est déterminé par la gestionnaire 18 entre la station au sol 14 et le serveur 19.

Lors de l'étape 230 suivante, le gestionnaire 18 forme et communique aux satellites 20-1 à 20-N des données de configuration.

Les données de configuration comprennent notamment une définition de chaque zone géographique à couvrir en mode transparent déterminée lors de l'étape 210 ainsi qu'une définition d'au moins une sous-bande de radiofréquences à transmettre en mode transparent dans ladite zone géographique à couvrir. Cette définition de la sous-bande peut par exemple comprendre les valeurs basse et haute de la bande spectrale correspondante.

Avantageusement, dans certains modes de réalisation, les données de configuration comprennent en outre un créneau temporaire indiquant un créneau de validité de ces données de configuration en relation avec chaque sous-bande. Par exemple, un mode transparent peut être appliqué pour une sous-bande donnée uniquement dans des créneaux temporaires définis par ces données de configuration.

En outre, lorsque l'étape 220 a été mise en oeuvre, les données de configuration comprennent en outre une définition de chaque chemin à couvrir en mode transparent déterminé lors de l'étape 220 ainsi qu'une définition d'au moins une sous-bande de radiofréquences à transmettre en mode transparent dans ledit chemin à couvrir. Cette dernière sous-bande est par exemple différente de celle associée à chaque zone géographique à couvrir en mode transparent.

Enfin, comme dans le cas des zones géographiques, les données de configuration peuvent comprendre en outre un créneau temporaire indiquant un créneau de validité de ces données de configuration en relation avec la sous-bande associée à chaque chemin à couvrir en mode transparent.

La communication des données de configuration aux satellites comprend par exemple la transmission de ces données par la gestionnaire 18 sous la forme des signaux RF vers au moins l'un des satellites 20-1 à 20-N et puis, la transmission de ces données via un réseau inter-satellitaire. Ce réseau est par exemple formé par des liaisons optiques expliquées en détail précédemment.

Dans l'exemple de la figure 4, les données de configuration sont transmises via la liaison radiofréquence RF₀ au satellite 20-4 et puis, à partir de ce satellite 20-4 à l'ensemble des autres satellites.

En revenant à la description de l'étape 110 du procédé de communication 100, il est donc clair que lors de cette étape 110, le module de commande 38 associé à chaque satellite 20-1 à 20-N reçoit les données de configuration générées par le gestionnaire 18. Ce module de commande 38 mémorise donc ces données

Puis, lors de l'étape 120 suivante, le module de commande 38 associé à chaque satellite 20-1 à 20-N surveille la position de ce satellite afin de basculer sa charge utile 22 en mode transparent.

En particulier, lors de cette étape 120, le module de commande 38 détermine la position du satellite correspondant.

Lorsque cette position couvre au moins une zone géographique à couvrir en mode transparent ou au moins un chemin à couvrir en mode transparent conformément aux données de configuration, le module de commande 38 bascule la charge utile 22 en mode transparent pour la sous-bande associée à cette zone géographique ou ce chemin, lors de l'étape 130 suivante. Lorsque la position du satellite ne couvre aucune zone géographique à couvrir en mode transparent et aucun chemin à couvrir en mode transparent, le module de commande 38 continue à exécuter de manière continue l'étape 120.

L'étape 130 de basculement en mode transparent comprend plusieurs sous-étapes. Ces sous-étapes sont mises en oeuvre pour chaque zone géographique à couvrir en mode transparent et pour chaque chemin à couvrir en mode transparent.

En particulier, lors de la sous-étape 131, le module de commande 38 identifie des satellites adjacents.

Pour ce faire, le module de commande 38 analyse les éphémérides à l'instant donné de chacun des satellites 20-1 à 20-N de la constellation 12. Ces éphémérides sont par exemple mémorisées au préalable.

Dans le sens de la présente invention, un satellite est considéré adjacent par rapport à un autre satellite lorsque ces deux satellites ont une liaison optique directe entre eux.

Ainsi, dans l'exemple de la figure 4, chaque couple des satellites 20-1 et 20-2, 20-2 et 20-3, 20-3 et 20-4, 20-4 et 20-5, et 20-5 et 20-6 est considéré comme satellites adjacents.

Lors de la sous-étape 132 suivante, le module 38 établit et maintient une topologie de relayage en mode transparent. Cette topologie est déterminée en fonction des satellites adjacents qui couvrent la même zone géographique à couvrir ou le même chemin à couvrir.

Dans l'exemple de la figure 4, les satellites 20-2 et 20-3 forment une topologie de relayage en mode transparent en relation avec la zone Z et les satellites 20-2, 20-3, 20-4 et 20-5 en relation avec le chemin à couvrir C.

Dans la mesure où les satellites 20-1 à 20-N défilent en permanence, cette topologie évolue de manière continue. Ainsi, le module de commande 38 met en jour cette topologie à chaque instant.

Lors de la sous-étape 133 suivante, le module de commande 38 configure des interconnexions entre des liaisons optiques et radiofréquence en fonction de la topologie déterminée à la sous-étape précédente.

Pour ce faire, le module de commande 38 configure les filtres du module de traitement 34 afin d'extraire des signaux RF ou des signaux optiques de la sous-bande correspondant à la zone géographique à couvrir ou au chemin à couvrir correspondant(e).

En particulier, lorsqu'il s'agit d'une zone géographique à couvrir en mode transparent, le module de commande 38 configure le module de traitement 34 de sorte à interconnecter l'ensemble des liaisons radiofréquence et l'ensemble des liaisons optiques correspondant à la sous-bande associée à cette zone géographique.

Lorsqu'il s'agit d'un chemin à couvrir en mode transparent, le module de commande 38 configure le module de traitement 34 de sorte à interconnecter l'ensemble des liaisons radiofréquence et l'ensemble des liaisons optiques correspondant à la sous-bande associée à ce chemin, seulement lorsque le satellite correspondant se trouve à l'une des extrémités de ce chemin conformément à la topologie déterminée lors de la sous-étape précédente. Pour tous les autres satellites, seules des liaisons optiques sont interconnectées.

Ainsi, dans l'exemple de la figure 4, les satellites 20-2 et 20-5 sont aux extrémités du chemin C. Leurs liaisons radiofréquence et optiques sont donc interconnectées en relation avec la sous-bande associée au chemin C. En revanche, pour les satellites 20-3 et 20-4, seules des liaisons optiques sont interconnectées en relation avec cette sous-bande.

Lorsque le basculement en mode transparent est finalisé, la charge utile 22 de chacun des satellites 20-1 à 20-N pour lequel le basculement en mode transparent a été effectué, met en oeuvre au moins l'une des étapes 140 à 160 en fonction de la topologie associée à ce satellite pour une sous-bande donnée.

L'étape 140 consiste à recevoir des signaux radiofréquence issus d'une station au sol 14, 16, 19 pour les transformer en signaux optiques et les transmettre à un satellite adjacent.

L'étape 150 consiste à transmettre des signaux optiques reçus d'un satellite adjacent vers un autre satellite adjacent.

L'étape 160 consiste à transformer des signaux optiques reçus d'un satellite adjacent en signaux RF pour les transmettre vers l'une des stations au sol 14, 16, 19.

En particulier, lors de l'étape 140, le récepteur/émetteur de signaux RF 32 reçoit des signaux RF issus par exemple de la station au sol 14, dite alors station émettrice 14. Ces signaux sont de large bande, par exemple de 1 GHz.

Puis, le module de traitement 34 convertit ces signaux RF dans le domaine fréquentiel au moyen par exemple d'un algorithme de type FFT (de l'anglais « Fast Fourier Transform »).

Puis, le module de traitement 34 filtre les signaux RF afin d'en extraire au moins la sous-bande correspondant à la zone géographique à couvrir en mode transparent ou au chemin à couvrir en mode transparent. Typiquement, il peut s'agir d'une ou de plusieurs sous-bandes de 100 MHz.

Puis, le module de traitement 34 commute les signaux de la sous-bande extraite en fonction de la topologie déterminée.

Puis, le module de traitement 34 reconvertit les signaux dans le domaine temporel et les transmet au modem d'émission/réception de signaux optiques 36 qui procède au multiplexage des flux relatifs à la sous-bande RF avec les autres flux transportés en optique. Une méthode de multiplexage appropriée pourrait être la méthode DWDM (de l'anglais « *Dense Wavelength Digital Multiplexing* »).

Lors de l'étape 150, le modem d'émission/réception de signaux optiques 36 reçoit via un port de réception des signaux optiques issus d'un satellite adjacent, les commute et les transmet via un port d'émission correspondant à un autre satellite adjacent.

Lors de l'étape 160, le modem d'émission/réception de signaux optiques 36 reçoit via un port de réception des signaux optiques issus d'un satellite adjacent.

Puis, le module de traitement 34 extrait de signaux optiques reçus la sous-bande des signaux RF correspondante et la commute uniquement vers le/les spots couvrant la zone géographique correspondante.

Puis, le flux RF transparent est remultiplexé avec les flux contenus dans les autres sous-bandes par sommation de signaux.

Après élévation en fréquence et amplification par un amplificateur par exemple de type BUC (de l'anglais « Baseband Up-Converter »), l'ensemble des signaux RF sont transmis vers une station au sol, par exemple la station de sol 16 dite alors station réceptrice, via le récepteur/émetteur de signaux RF 32.

L'étape 170 suivante est mise en oeuvre lorsque le satellite correspondant ne se trouve plus au-dessus de la zone géographique ou du chemin à couvrir en mode transparent pour laquelle ou lequel, il a été basculé en mode transparent. Ainsi, lors de cette étape, le module de commande 38 associé à ce satellite bascule sa charge utile 22 de ce satellite en mode de fonctionnement normal au moins pour la sous-bande correspondant à cette zone géographique ou à ce chemin à couvrir en mode transparent.

On conçoit alors que la présente invention présente un certain nombre d'avantages.

En particulier, l'invention permet d'assurer une communication protégée en mode transparent via une constellation de satellites défilants tout en évitant les congestions dans les réseaux inter-satellitaires et la nécessité d'utilisation d'un grand nombre de serveurs (« hubs »).

Cela est atteint en choisissant des satellites devant basculer en mode transparent uniquement pour une sous-bande donnée. Cette sous-bande est choisie en fonction de la zone géographique ou du chemin à couvrir en mode transparent. Ainsi, il est n'est pas nécessaire que l'ensemble des satellites de la constellation soient en mode transparent. Cela évite alors de congestions du réseau inter-satellitaire tout en assurant une communication protégée.

## Revendications

1. Procédé de configuration (200) d'une constellation de satellites (12) défilants pour mettre en oeuvre une communication en mode transparent entre au moins deux stations au sol (14, 16) via cette constellation de satellites (12), le procédé de configuration (200) comprenant les étapes suivantes :
- détermination (210) d'une zone géographique à couvrir en mode transparent, ladite zone géographique à couvrir comprenant lesdites stations au sol (14, 16) ;
- formation et communication (230) de données de configuration aux satellites de la constellation (12) pour basculer en mode transparent une charge utile (22) de chaque satellite (20-1,...,20-N) couvrant ladite zone géographique à couvrir, les données de configuration comprenant une définition de ladite zone géographique à couvrir et une définition d'au moins une sous-bande de radiofréquences à transmettre en mode transparent dans ladite zone géographique à couvrir ;
la charge utile (22) de chaque satellite (20-1,...,20-N) en mode transparent étant apte à retransmettre des signaux de la sous-bande de radiofréquences correspondante reçus d'une station émettrice au sol (14) via une liaison radiofréquence à la charge utile (22) d'un satellite adjacent (20-1,...,20-N) via une liaison optique, le satellite adjacent (20-1,...,20-N) couvrant la même zone géographique à couvrir que ledit satellite (20-1,...,20-N) en mode transparent.

2. Procédé de configuration (200) selon la revendication 1, dans lequel les données de configuration comprennent en outre un créneau temporaire indiquant un créneau de validité de ces données de configuration.

3. Procédé de configuration (200) selon la revendication 1 ou 2, dans lequel la charge utile (22) de chaque satellite (20-1,...,20-N) en mode transparent est apte en outre à retransmettre un flux optique reçu de la charge utile (22) d'un satellite adjacent (20-1,...,20-N) via une liaison optique et comprenant des signaux de la sous-bande de radiofréquences correspondante, à la charge utile (22) d'un autre satellite (20-1,...,20-N) adjacent via une liaison optique.

4. Procédé de configuration (200) selon l'une quelconque des revendications précédentes, dans lequel la charge utile (22) de chaque satellite (20-1,... ,20-N) en mode transparent est apte en outre à retransmettre un flux optique reçu de la charge utile (22) d'un satellite adjacent (20-1,...,20-N) via une liaison optique, à une station réceptrice au sol (16) via une liaison radiofréquence.

5. Procédé de configuration (200) selon l'une quelconque des revendications précédentes, comprenant en outre une étape suivante :
- détermination (220) d'un chemin à couvrir en mode transparent entre une station au sol (14) et un serveur (19) ;
les données de configuration comprenant en outre une définition dudit chemin à couvrir et une définition d'au moins une sous-bande de radiofréquences à transmettre en mode transparent selon ledit chemin à couvrir ;
le chemin à couvrir en mode transparent comprenant un satellite d'extrémité (20-1,... ,20-N) pour chaque extrémité dudit chemin et au moins un satellite intermédiaire (20-1,...,20-N) ;
la charge utile (22) de chaque satellite d'extrémité (20-1,... ,20-N) en mode transparent étant apte à interconnecter :
+ une liaison radiofréquence avec ladite station au sol (14) ou le serveur (19) pour la sous-bande de radiofréquences correspondante ; et
+ une liaison optique avec la charge utile (22) du satellite intermédiaire (20-1,...,20-N).

6. Procédé de communication (100) en mode transparent entre au moins deux stations au sol (14, 16) via une constellation de satellites (12) défilants, le procédé de communication (100) comprenant les étapes suivantes :
- acquisition des données de configuration générées conformément au procédé de configuration (200) selon l'une quelconque des revendications précédentes ;
- détermination (120) de la position de chaque satellite (20-1,...,20-N) ;
- basculement (130) de la charge utile (22) d'au moins un satellite (20-1,...,20-N) en mode transparent lorsque la position de ce satellite (20-1,...,20-N) couvre au moins une zone géographique à couvrir en mode transparent définie par les données de configuration.

7. Procédé de communication (100) selon la revendication 6, comprenant en outre au moins une étape parmi les étapes suivantes, mise en oeuvre par la charge utile (22) basculée en mode transparent de l'un des satellites (20-1,... ,20-N) :
- réception (140) de signaux radiofréquence issus d'une station au sol (14, 16), transformation de la sous-bande de ces signaux radiofréquence associée à la zone géographique correspondante en signaux optiques et transmission de ces signaux optiques à la charge utile (22) d'un satellite adjacent ;
- transmission (150) de signaux optiques reçus de la charge utile (22) d'un satellite adjacent vers la charge utile (22) d'un autre satellite adjacent ;
- transformation (160) de la sous-bande associée à la zone géographique correspondante de signaux optiques reçus de la charge utile (22) d'un satellite adjacent en signaux radiofréquence et transmission de ces signaux radiofréquence vers une station au sol (14, 16).

8. Procédé de communication (100) selon la revendication 6 ou 7, dans lequel l'étape de basculement (130) de la charge utile (22) d'au moins un satellite (20-1,...,20-N) en mode transparent comprend les sous-étapes suivantes :
- identification (131) de satellites adjacents dans la zone géographique correspondante ;
- établissement et maintien (132) d'une topologie d'un réseau inter-satellitaire de relayage en mode transparent ;
- configuration (133) des interconnexions entre des liaisons optiques et radiofréquence en fonction de la topologie déterminée.

9. Gestionnaire (18) configuré pour mettre en oeuvre le procédé de configuration (200) selon l'une quelconque des revendications 1 à 5.

10. Système de communication (10) comprenant :
- un gestionnaire (18) selon la revendication 9 ;
- une constellation de satellites (12) ;
- au moins deux stations au sol (14, 16).

## Patentansprüche

1. Konfigurationsverfahren (200) einer Konstellation von umlaufenden Satelliten (12), um eine Kommunikation in transparentem Modus zwischen mindestens zwei Bodenstationen (14, 16) über diese Konstellation von Satelliten (12) zu implementieren, das Konfigurationsverfahren (200) umfassend die folgenden Schritte:
- Bestimmen (210) eines geografischen Gebiets, das in transparentem Modus abgedeckt werden soll, das abzudeckende geografische Gebiet umfassend die Bodenstationen (14, 16);
- Bilden und Übermitteln (230) von Konfigurationsdaten an die Satelliten der Konstellation (12), um eine Nutzlast (22) von jedem Satelliten (20-1, ..., 20-N), der das abzudeckende geografische Gebiet abdeckt, in transparenten Modus zu schalten, wobei die Konfigurationsdaten eine Definition des abzudeckenden geografischen Gebiets und eine Definition von mindestens einem Funkfrequenz-Teilband, das in dem abzudeckenden geografischen Gebiet in transparentem Modus zu übertragen ist, umfassen;
die Nutzlast (22) von jedem Satelliten (20-1, ..., 20-N) in transparentem Modus geeignet ist, um Signale des entsprechenden Funkfrequenz-Teilbands, die von einer Bodensendestation (14) über eine Funkfrequenzverbindung empfangen werden, über eine optische Verbindung an die Nutzlast (22) eines benachbarten Satelliten (20-1, ..., 20-N) weiterzuleiten, wobei der benachbarte Satellit (20-1, ..., 20-N) das gleiche abzudeckende geografische Gebiet wie der genannte Satellit (20-1, ..., 20-N) in transparentem Modus abdeckt.

2. Konfigurationsverfahren (200) nach Anspruch 1, wobei die Konfigurationsdaten ferner ein temporäres Zeitfenster umfassen, das ein Zeitfenster für die Gültigkeit dieser Konfigurationsdaten angibt.

3. Konfigurationsverfahren (200) nach Anspruch 1 oder 2, wobei die Nutzlast (22) von jedem Satelliten (20-1, ..., 20-N) in transparentem Modus ferner geeignet ist, um einen optischen Strom, der von der Nutzlast (22) eines benachbarten Satelliten (20- 1, ..., 20-N) über eine optische Verbindung empfangen wird und Signale des entsprechenden Funkfrequenz-Teilbands umfasst, über eine optische Verbindung an die Nutzlast (22) eines anderen benachbarten Satelliten (20-1, ..., 20-N) weiterzuleiten.

4. Konfigurationsverfahren (200) nach einem der vorherigen Ansprüche, wobei die Nutzlast (22) von jedem Satelliten (20-1, ..., 20- N) in transparentem Modus ferner geeignet ist, um einen optischen Fluss, der von der Nutzlast (22) eines benachbarten Satelliten (20-1, ..., 20-N) über eine optische Verbindung empfangen wird, über eine Funkfrequenzverbindung an eine Bodenempfangsstation (16) weiterzuleiten.

5. Konfigurationsverfahren (200) nach einem der vorherigen Ansprüche, ferner umfassend einen folgenden Schritt:
- Bestimmen (220) eines Pfads, der in transparentem Modus zu überbrücken ist, zwischen einer Bodenstation (14) und einem Server (19);
die Konfigurationsdaten ferner umfassend eine Definition des abzudeckenden Pfads und eine Definition mindestens eines Funkfrequenz-Teilbands, das in transparentem Modus entlang des abzudeckenden Pfads zu übertragen ist;
der in transparentem Modus abzudeckende Pfad umfassend einen Endsatelliten (20-1, ..., 20-N) für jedes Ende des Pfads und mindestens einen Zwischensatelliten (20-1, ..., 20-N);
wobei die Nutzlast (22) von jedem Endsatelliten (20-1, ..., 20-N) geeignet ist, um in transparentem Modus Folgendes miteinander zu verbinden:
+ eine Funkfrequenzverbindung mit der Bodenstation (14) oder dem Server (19) für das entsprechende Funkfrequenz-Teilband; und
+ eine optische Verbindung mit der Nutzlast (22) des Zwischensatelliten (20-1, ..., 20-N).

6. Verfahren zur Kommunikation (100) in transparentem Modus zwischen mindestens zwei Bodenstationen (14, 16) über eine Konstellation von umlaufenden Satelliten (12), das Kommunikationsverfahren (100) umfassend die folgenden Schritte:
- Erfassen der Konfigurationsdaten, die gemäß dem Konfigurationsverfahren (200) nach einem der vorherigen Ansprüche erzeugt wurden;
- Bestimmen (120) der Position von jedem Satelliten (20-1, ..., 20-N);
- Umschalten (130) der Nutzlast (22) von mindestens einem Satelliten (20-1, ..., 20-N) in transparenten Modus, wenn die Position dieses Satelliten (20-1, ..., 20-N) mindestens ein durch die Konfigurationsdaten definiertes, in transparentem Modus abzudeckendes geografisches Gebiet abdeckt.

7. Kommunikationsverfahren (100) nach Anspruch 6, ferner umfassend mindestens einen der folgenden Schritte, der von der in den transparenten Modus geschalteten Nutzlast (22) eines der Satelliten (20-1, ..., 20-N) implementiert wird:
- Empfangen (140) von Funkfrequenzsignalen von einer Bodenstation (14, 16), Umwandeln des Teilbands dieser Funkfrequenzsignale, das mit dem entsprechenden geografischen Gebiet assoziiert ist, in optische Signale und Übertragen dieser optischen Signale an die Nutzlast (22) eines benachbarten Satelliten;
- Übertragen (150) optischer Signale, die von der Nutzlast (22) eines benachbarten Satelliten empfangen werden, an die Nutzlast (22) eines anderen benachbarten Satelliten;
- Transformieren (160) des mit dem entsprechenden geographischen Gebiet verbundenen Teilbands von optischen Signalen, die von der Nutzlast (22) eines benachbarten Satelliten empfangen werden, in Funkfrequenzsignale und Übertragung dieser Funkfrequenzsignale zu einer Bodenstation (14, 16).

8. Kommunikationsverfahren (100) nach Anspruch 6 oder 7, wobei der Schritt eines Umschaltens (130) der Nutzlast (22) mindestens eines Satelliten (20- 1, ..., 20-N) in transparenten Modus die folgenden Teilschritte umfasst:
- Identifizieren (131) von benachbarten Satelliten in der entsprechenden geografischen Zone;
- Einrichten und Aufrechterhalten (132) einer Topologie eines satellitenübergreifenden Weiterleitungsnetzwerks in transparentem Modus;
- Konfigurieren (133) der Verbindungen zwischen optischen und Funkfrequenzverbindungen entsprechend der bestimmten Topologie.

9. Managementeinrichtung (18), die konfiguriert ist, um das Konfigurationsverfahren (200) nach einem der Ansprüche 1 bis 5 zu implementieren.

10. Kommunikationssystem (10), umfassend:
- eine Managementeinrichtung (18) nach Anspruch 9;
- eine Konstellation von Satelliten (12);
- mindestens zwei Bodenstationen (14, 16).

## Claims

1. A method (200) for configuring a constellation of moving satellites (12) to implement communication in transparent mode between at least two ground stations (14, 16) via said constellation of satellites (12), the configuration method (200) comprising the following steps:
- determining (210) a geographical area to be covered in transparent mode, said geographical area to be covered comprising said ground stations (14, 16);
- forming and communicating (230) configuration data to the satellites of the constellation (12) in order to switch into transparent mode a payload (22) of each satellite (20-1, ..., 20-N) covering said geographical area to be covered, the configuration data comprising a definition of said geographical area to be covered and a definition of at least one radio frequency sub-band to be transmitted in transparent mode within said geographical area to be covered;
the payload (22) of each satellite (20-1, ..., 20-N) in transparent mode being able to retransmit signals of the corresponding radio frequency sub-band received from a ground transmitting station (14) via a radio frequency link to the payload (22) of an adjacent satellite (20-1, ..., 20-N) via an optical link, the adjacent satellite (20-1, ..., 20-N) covering the same geographical area to be covered as said satellite (20-1, ..., 20-N) in transparent mode.

2. The configuration method (200) according to claim 1, wherein the configuration data further comprises a temporary slot indicating a validity slot of this configuration data.

3. The configuration method (200) according to claim 1 or 2, wherein the payload (22) of each satellite (20-1, ..., 20-N) in transparent mode is also able to retransmit an optical flow received from the payload (22) of an adjacent satellite (20-1, ..., 20-N) via an optical link and comprising signals of the corresponding radio frequency sub-band, to the payload (22) of another adjacent satellite (20-1, ..., 20-N) via an optical link.

4. The configuration method (200) according to any one of the preceding claims, wherein the payload (22) of each satellite (20-1, ... 20-N) in transparent mode is also able to retransmit an optical stream received from the payload (22) of an adjacent satellite (20-1, ..., 20-N) via an optical link, to a ground receiving station (16) via a radio frequency link.

5. The configuration method (200) according to any one of the preceding claims, further comprising the following steps:
- determining (220) a path to be covered in transparent mode between a ground station (14) and a server (19);
the configuration data further comprising a definition of said path to be covered and a definition of at least one radio frequency sub-band to be transmitted in transparent mode along said path to be covered;
the path to be covered in transparent mode comprising an end satellite (20-1, ... 20-N) for each end of said path and at least one intermediate satellite (20-1, ..., 20-N); the payload (22) of each end satellite (20-1, ..., 20-N) in transparent mode being able to interconnect:
+ a radio frequency link with said ground station (14) or server (19) for the corresponding radio frequency sub-band; and
+ an optical link with the payload (22) of the intermediate satellite (20-1, ..., 20-N).

6. A method for communication (100) in transparent mode between at least two ground stations (14, 16) via a constellation of moving satellites (12), the communication method (100) comprising the following steps:
- acquiring the configuration data generated in accordance with the configuration method (200) according to any one of the preceding claims;
- determining (120) the position of each satellite (20-1, ..., 20-N);
- switching (130) the payload (22) of at least one satellite (20-1, ..., 20-N) to transparent mode when the position of this satellite (20-1, ..., 20-N) covers at least one geographical area to be covered in transparent mode defined by the configuration data.

7. The communication method (100) according to claim 6, further comprising at least one of the following steps, implemented by the payload (22) switched to the transparent mode of one of the satellites (20-1, ..., 20-N):
- receiving (140) radio frequency signals from a ground station (14, 16), converting the sub-band of these radio frequency signals associated with the corresponding geographical area into optical signals and transmitting these optical signals to the payload (22) of an adjacent satellite;
- transmitting (150) optical signals received from the payload (22) of one adjacent satellite to the payload (22) of another adjacent satellite;
- converting (160) the sub-band associated with the corresponding geographical area from optical signals received from the payload (22) of an adjacent satellite into radio frequency signals and transmitting these radio frequency signals to a ground station (14, 16).

8. The communication method (100) according to claim 6 or 7, wherein the step of switching (130) the payload (22) of at least one satellite (20-1, ..., 20-N) into transparent mode comprises the following sub-steps:
- identifying (131) adjacent satellites in the corresponding geographical area;
- establishing and maintaining (132) an inter-satellite relay network topology in transparent mode;
- configuring (133) interconnections between optical and radio frequency links as a function of the determined topology.

9. A manager (18) configured to implement the configuration method (200) according to any one of claims 1 to 5.

10. A communication system (10) comprising:
- a manager (18) according to claim 9;
- a constellation of satellites (12);
- at least two ground stations (14, 16).
